# EUROPÄISCHE PATENTANMELDUNG

(11) **EP 3 035 270 A1**
(43) Veröffentlichungstag der Anmeldung: **22.06.2016**
(21) Anmeldenummer: 15003559.0
(22) Anmeldetag: 14.12.2015
(51) Int. Cl.: G06Q 20/38, G06Q 20/32, G06Q 20/34

(54) **KARTENBASIERTE OFFLINE-TOKEN GENERIERUNG**

(30) Priorität: 15.12.2014 DE 102014018566; 03.12.2015 DE 102015015621
(71) Anmelder: Giesecke & Devrient GmbH, 81677 München (DE)
(72) Erfinder: Meister, Gisela, 81737 München (DE); Eichholz, Jan, 80997 München (DE); Neubauer, Lucas, 80802 München (DE)

(57) **Zusammenfassung**

Die vorliegende Erfindung offenbart ein Verfahren zur Erzeugung eines Tokens 14 mittels eines tragbaren Datenträgers 16, wobei der Token 14 zum Bezahlen verwendet wird, wobei sich zuerst ein Benutzer, sprich Käufer, gegenüber dem tragbaren Datenträger 16 authentisiert, anschließend werden mittels einer Anwendung von dem Benutzer Parameter von Einschränkungen zur Nutzung des Tokens 14 bestimmt und zum Schluß wird auf dem tragbaren Datenträger 16 der Token 14 erzeugt.

## Beschreibung

Die Erfindung beschreibt ein Verfahren zur Erzeugung eines Tokens für Bezahlanwendungen z.B. auf einer Karte, wie z.B. einer Chipkarte, Bankkarte, Kreditkarte, SIM-Karte, etc. oder auf einem mobilen Kommunikationsgerät, wie z.B. einem Smartphone, mittels z.B. eines elektronischen Sicherheitselements oder einer Universal Integrated Chip Card oder einer Host Card Emulation.

In der EMV Payment Tokenisation Specification, Version 1.0, vom März 2014 ist eine Erzeugung eines Tokens zum Bezahlen beschrieben. Die Bedeutung der in dieser Anmeldung verwendeten Begriffe entspricht der Definition, die in der Specifikation aufgeführt ist.

Nachteilig an dem Verfahren gemäß Stand der Technik ist, dass zur Erzeugung eines Tokens eine Online-Verbindung zwischen einem Token Service Provider und einem Smart Phone oder anderem für den Bezahlvorgang verwendeten Gerät eines Käufers bestehen muss. Um eine sichere Übertragung zwischen dem Token Service Provider und dem Smart Phone des Käufers zu gewährleisten, muss eine Authentisierung des Käufers oder des Smart Phones stattfinden. Ferner werden der vom Token Service Provider erzeugte Token zusammen mit weiteren, sicherheitsrelevanten Daten bzw. vom Token Service Provider benötigte Daten zur Generierung des Tokens über eine nicht bekannte, unsichere Verbindung übertragen und können somit von unberechtigten Dritten abgehört werden.

Ausgehend von den Nachteilen des Stands der Technik ist es Aufgabe der Erfindung eine Lösung für die Probleme des Stands der Technik zur Verfügung zu stellen.

Die Aufgabe der Erfindung wird durch den unabhängigen Anspruch gelöst. Vorteilhafte Ausführungen sind in den abhängigen Ansprüchen beschrieben.

Zur Lösung der Aufgabe offenbart die Erfindung ein Verfahren zur Durchführung einer Zahlungstransaktion mittels eines Tokens, wobei der Token von einer Prüfungsstelle, z.B. einem sogenannten Token Service Provider, auf seine Echtheit geprüft wird und nach erfolgreicher Prüfung auf Echtheit eine Authentisierungsstelle, z.B. ein sogennanter Issuer, nach erfolgreicher Prüfung des Tokens auf Authentizität die Durchführung der Zahlungstransaktion freigibt. Der wesentliche Unterschied der Erfindung zum Stand der Technik ist, dass der erfindungsgemäß erzeugte Token nicht durch die Prüfungsstelle, z.B. den Token Service Provider, erzeugt wird, sondern dass der Token von und auf einem Datenträger eines Käufers erzeugt wird. Der Vorteil des erfindungsgemäßen Verfahrens ist, dass der Token ohne eine Onlineverbindung zu der Prüfungsstelle, z.B. dem Token Service Provider, erzeugt wird. Ferner hat der Käufer die Möglichkeit, dass er zusätzliche Einschränkungen der Verwendung des Tokens definieren kann, z.B. maximaler Betrag, Anzahl der Transaktionen, Region, etc. Ferner werden die Daten des Tokens nur über eine kurze Strecke zwischen Datenträger und Kommunikationsgerät übertragen. Das erfindungsgemäße Verfahren ermöglicht es, dass Bezahltransaktionen durchgeführt werden, wobei die im Stand der Technik verwendete Kartenidentifikation, die sogenannte Primary Account Numer, abgekürzt mit PAN, durch einen erfindungsgemäßen in der Benutzung eingeschränkten Token ersetzt wird und somit für einen unberechtigten Dritten, welcher den Token illegal abgehört hat, nicht verwendbar ist.

Der Datenträger verwendet zur Erzeugung des Tokens eine Zufallszahl, welche vom Datenträger erzeugt wird. Ferner wird zur Erzeugung des Tokens mindestens eine Vorgabe zur Verwendung des Tokens, und eine Identifikationsnummer des Datenträgers und/oder Kontodaten des Käufers verwendet. Zur Erhöhung der Sicherheit können weitere, geeignete Daten verwendet werden. Alternativ kann zur Erzeugung des Tokens ein Zähler verwendet werden, der mit Erzeugung eines Tokens inkrementiert und anschließend verschlüsselt wird.

Der Käufer oder der Datenträger geben eine Verwendung des Tokens hinsichtlich eines Zahlungsempfängers und/oder eines Zahlungsbetrags und/oder einer Gültigkeitsdauer des Tokens und/oder einer zulässigen Anzahl von Verwendungen des Tokens vor, z.B. dass der Token nur einmal verwendet werden darf für eine Bezahlung über einen bestimmten Betrag, an einen bestimmten Zahlungsempfänger, wobei die Zahlung nur innerhalb einer bestimmten Zeit durchgeführt werden kann.

Zur Erhöhung der Sicherheit der Daten des Tokens werden diese verschlüsselt. Die Daten des Tokens werden dazu symmetrisch oder asymmetrisch verschlüsselt. Beispielsweise kann eine Verschlüsselung mit AES oder 3DES erfolgen. Darüberhinaus kann das erfindungsgemäße Verfahren erweitert werden um eine Erzeugung von zusätzlich notwendigen Daten, wie z.B. von sogenannten Payment-Schlüsseln.

Um die Sicherheit weiter zu erhöhen, kann für den erfindungsgemäßen Token eine Signatur durch den Datenträger berechnet werden, um eine Veränderung des Tokens feststellen zu können. Für die Signatur kann ein Schlüssel des Datenträgers verwendet werden. Der Vorteil der Signatur ist, dass sich das bekannte Bezahlungssystem gemäß der EMV Payment Tokenisation Specification, EMVCo, Version 1.0, März 2014, nur hinsichtlich einer Überprüfung des Tokens ändert. Statt mit Hilfe einer Datenbank zu prüfen, ob ein Token ausgegeben wurde, muss erfindungsgemäß nur die Signatur des Tokens geprüft werden, um die Gültigkeit des Tokens festzustellen. Ferner ist eine Sperrlistenprüfung möglich. Dies bedeutet, dass das erfindungsgemäße Verfahren einfach und ohne größere Veränderungen in bestehenden Systemen zum Bezahlen integriert werden kann.

Bevor ein Token erzeugt wird, authentisiert sich der Käufer gegenüber dem Datenträger. Der Käufer authentisiert sich gegenüber dem Token z.B. mittels einer persönlichen Identifikationsnummer, einer sogenannten PIN, oder eines biometrischen Merkmals.

Der Datenträger selbst kann in Hardware oder in Software realisiert sein. Der Datenträger ist beispielsweies eine SIM-Karte oder eine Bankkarte oder eine Kreditkarte oder ein Sicherheitsmodul mit einem Chip zur Datenverarbeitung. Als Sicherheitsmodul wird beispielsweise ein elektronisches Sicherheitselement, abgekürzt mit eSE, oder eine Universal Integrated Chip Card, abgekürzt mit UICC, oder eine Trusted Execution Environment, abgekürzt mit TEE, verwendet.

Der Datenträger selbst kommuniziert mit einem Kommunikationsgerät, z.B. damit sich der Käufer gegenüber dem Datenträger authentisieren kann, oder um Daten vom Datenträger mittels des Kommunikationsgeräts an die Prüfungsstelle, z.B. den Token Service Provider, zu übertragen. Das Kommunikationsgerät ist beispielsweise ein Notebook, ein Tabletcomputer, ein Laptop, ein Smartphone, eine Smartwatch oder ein Kartenterminal eines Händlers oder einer Bank ist. Das Kommunikationsgerät kommuniziert kontaktlos oder kontaktgebunden mit dem Datenträger oder mit anderen Kommunikationsteilnehmern, z.B. der Prüfungsstelle, z.B. dem Token Service Provider. Im Kommunikationsgerät wird zur Berechnung des Tokens z.B. ein Sicherheitsmodul verwendet, um die Sicherheit der Datenverarbeitung zu erhöhen.

Ein wesentlicher Vorteil der Erfindung ist, dass eine Bezahltransaktion, die z.B. über eine kontaktlose Schnittstelle durchgeführt wird, nicht mehr die wiederverwendbare Kartenindentifikationsnummer überträgt, sondern eine für den Bezahlvorgang erfindungsgemäße transaktionsspezifische Identifikation. Ein Angreifer, der den Datenaustausch dieses Bezahlvorganges mitprotokolliert, kann die transaktionsspezifische Identifikation, sprich den erfindungsgemäßen Token, nicht für weitere Bezahlvorgänge verwenden.
Figur 1 zeigt ein mögliches Token basiertes Bezahlsystem gemäß der EMV Payment Tokenisation Specification, Version 1.0 vom März 2014.
Figur 2 zeigt eine erste Variante einer erfindungsgemäßen Erzeugung eines Tokens.

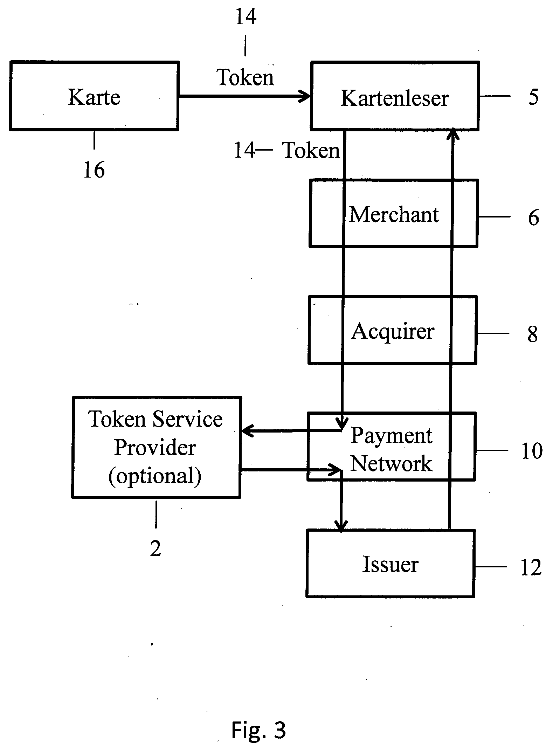

Figur 3 zeigt eine zweite Variante einer erfindungsgemäßen Erzeugung eines Tokens. EMVCo, der Urheber der Specification, hat mit der Specification ein Konzept für ein Token basiertes Bezahlsystem vorgestellt. Das erfindungsgemäße Verfahren bietet gegenüber klassischen, auf Kreditkartennummern basierenden Verfahren den Vorteil, dass eine Primary Account Number, abgekürzt mit PAN, nicht für eine Transaktion zum Bezahlen benötigt wird und somit von einem Angreifer nicht abgegriffen und für weitere Bezahlvorgänge verwendet werden kann. Ein weiterer Vorteil ist, dass der erfindungsgemäße Token Einschränkungen haben kann, z.B. hinsichtlich eines Datums, wann z.B. der Token verwendet werden darf, einer Anzahl von zulässigen Benutzungen des Tokens, eines maximal zulässigen Bezahlvolumens des Tokens oder eines zulässigen Händlers.

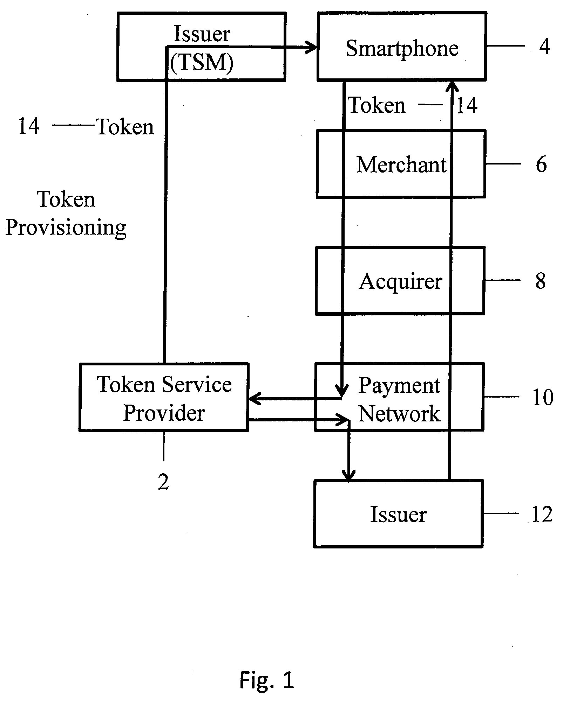

Figur 1 zeigt den schematischen Ablauf des aus dem Stand der Technik bekannten Bezahlsystems gemäß EMVCo. Ein Token Service Provider 2 erstellt einen Token 14 mit den gewünschten Einschränkungen des Käufern. Alternativ können auch von dem Token Service Provider 2 Einschränkungen vorgegeben werden. Nach der Erstellung des Tokens 14 wird dieser auf einem sicheren Weg an ein Gerät eines Käufers, z.B. ein Smartphone 4, übertragen, sogenanntes Token Provisioning. Dies kann beispielsweise mittels eines Trusted Service Managers, abgekürzt mit TSM, geschehen, wobei der TSM in Figur 1 im Auftrag eines Issuers 12 handelt. Der Issuer 12 ist beispielsweise eine Bank, die eine Bankkarte des Käufers ausgibt und eine Zahlungstransaktion authentisiert, wenn sie vom Token Service Provider 2 eine Nachricht über einen gültigen Token erhält. Zum Bezahlen wird der Token 14 über Merchant 6, welcher einen Händler darstellt, Acquirer 8, welcher z.B. eine Bank des Händlers 6 ist, Payment Network 10, was z.B. ein von einem Kreditkartenunternehmen betriebenes Netzwerk sein kann, an den Token Service Provider 2, wobei der Token Service Provider 2 beispielsweise ein Kreditkartenunternehmen ist, geleitet. Der Token Service Provider 2 prüft die Gültigkeit des Tokens 14 und validiert damit den Token 14 für den aktuellen Bezahlvorgang.

Dieses Verfahren gemäß Stand der Technik weist den Nachteil auf, dass zur Übertragung des Tokens 14 an das Gerät 4 des Benutzers immer eine Online-Verbindung notwendig ist. Ferner muss für eine sichere Übertragung des Tokens 14 an das Gerät 4 des Benutzers eine Authentisierung des Benutzers bzw. des Geräts 4 stattfinden. Zum Bezahlen wird der Token 14 zusammen mit weiteren sicherheitsrelevanten Daten über eine nicht genau bekannte, globale Netzwerkverbindung über Merchant 6, Acquirer 8 und Payment Network 10 übertragen, deren Sicherheit fraglich ist.

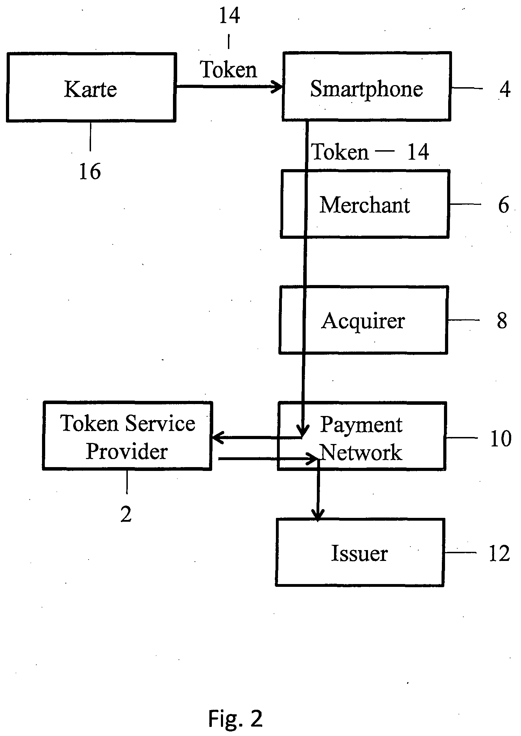

Figur 2 zeigt eine erste Variante einer erfindungsgemäßen Erzeugung eines Tokens 14, um die Nachteile des Bezahlsystems gemäß Figur 1 von EMVCo zu beheben.

Nachdem gewöhnlich jeder Käufer eine Paymentkarte zur Durchführung von Transationen zum Bezahlen besitzt, bietet es sich an, dass der Token 14 zum Bezahlen nicht vom Token Service Provider 2, sondern von einer Karte 16, als tragbarer Datenträger des Käufers erzeugt wird.

Die Karte 16 ist zur Erzeugung des Tokens 14 z.B. mit einem Smartphone 4 verbunden. Zu Beginn authentisiert sich ein Benutzer gegenüber der Karte 16, z.B. durch Eingabe einer PIN am Smartphone 4 oder durch eine biometrische Authentisierung, z.B. durch Erfassung eines Fingerabdrucks mittels Smartphone. Anschließend bestimmt der Benutzer die Parameter zur Einschränkung der Nutzung des Tokens 14, z.B. mittels einer App. Als Einschränkungen dienen z.B. ein zulässiger Händler, ein zulässiger Höchstbetrag bei der Zahlung, eine Gültigkeitsdauer des Tokens 14 oder eine bestimmte Anzahl von Nutzungen des Tokens 14. Darauf folgend wird der Token 14 auf der Karte 16 erzeugt. Zur Erzeugung des Tokens 14 verwendet die Karte 16 eine Zufallszahl, welche die Karte 16 selbst erzeugt hat. Ferner werden eine eindeutige Identität der Karte 16 und des Händlers sowie die oben genannten Einschränkungen zur Erzeugung des Tokens 14 verwendet. Am Ende wird der erzeugte Token 14 mittels eines Schlüssels der Karte 16 signiert.

Für das Einlösen des Tokens 14, d.h. zum Bezahlen ändert sich im Vergleich zum in Figur 1 beschriebenen System von EMVCo nur die Verifikation, d.h. Prüfung des Tokens 14. Statt mit Hilfe einer Datenbank des Token Service Providers 2 zu prüfen, ob der Token 14 ausgegeben wurde, muss nun mit Hilfe der Signatur die Gültigkeit des Tokens 14 geprüft werden.

Dieses Verfahren hat gegenüber der Online-Lösung von Figur 1 den Vorteil, dass der Token 14 ohne Online-Verbindung zwischen der Karte 16 und dem Token Service Provider 2 erzeugt wird. Ferner kann der Benutzer sprich Käufer zusätzliche Einschränkungen zur Benutzung des Tokens 14 definieren, z.B. eine örtliche Region, Maximalbeträge, Anzahl der Transaktionen, etc. Die notwendigen sicherheitskritischen Daten zum Bezahlen werden nur über eine kurze, unsichere Verbindung übertragen. Ferner kann das Verfahren um die Erzeugung von zusätzlich notwendigen sicherheitsrelevanten Daten, z.B. Payment Schlüssel, erweitert werden.

Figur 3 zeigt eine zweite Variante einer erfindungsgemäßen Erzeugung eines Tokens. Die zweite Variante beschreibt eine weitere Anwendung für den EMV Token zum Bezahlen im Internet.

Im Stand der Technik wird dazu die Primary Account Number, abgekürzt PAN, nach einer Registrierung auf einem Server eines Onlinehändlers gespeichert. Nach dem Konzept von EMVCo wird die PAN durch einen Token ersetzt. Hierbei muss ein Karteninhaber aber weiterhin seine PAN an den Händler übertragen, der mit dieser vom Token Service Provider den zu speichernden Token erzeugen lässt.

Nachteilig am EMVCo-Konzept ist, dass der Händler eine zusätzliche Beziehung zum Token Service Provider eingehen und dort die Token erzeugen lassen muss. Ferner wird die PAN weiterhin vom Karteninhaber über das Internet zum Händler übertragen. Ferner ist am Stand der Technik nachteilig, dass zwischen einem Kartenleser 5 und dem Merchant 6 eine unsichere Kommunikationsverbindung besteht, die von unberechtigten Dritten abgehört werden kann.

Da normalerweise jeder Käufer eine Paymentkarte besitzt, bietet es sich an, den Token nicht ausschließlich beim Token Service Provider 2 zu generieren, sondern auch eine Generierung auf der Karte 16 zu ermöglichen, wie es in Figur 3 dargestellt ist.

Für die Generierung bzw. Erzeugung eines Tokens 14 ergibt sich folgender Ablauf. Als erstes findet eine Authentisierung eines Benutzers gegenüber der Karte 16 z.B. mittels PIN oder eines biometrischen Verfahrens statt. Anschließend führt der Benutzer eine Parametrisierung von Einschränkungen des Tokens 14 mittels einer Anwendung am Kartenleser 5 aus. Alternativ ist es auch möglich, dass sich die Karte 16 (z.B. als elektronisches sicheres Element, abgekürzt mit eSE, oder als Teil der SIM Karte) in einem Smartphone befindet, wobei eine Datenübertragung zwischen dem Smartphone und dem Terminal 5, z.B. mittels NFC, stattfindet. Zur Parametrisierung am Smartphone verwendet der Benutzer z.B. eine App. Wie oben bereits beschrieben, kann der Benutzer eine Beschränkung des Tokens 14 hinsichtlich z.B. eines Händlers, eines Betrags, einer Dauer oder einer Anzahl von Nutzungen des Tokens 14 ausführen. Darauffolgend wird der Token 14 auf der Karte 16 erstellt, indem zuerst eine Zufallszahl auf der Karte 16 erstellt wird. Dann wird die Primary Account Number, abgekürzt PAN, abgeleitet indem er, z.B. symmetrisch verschlüsselt wird mit einem Advanced-Encryption-Standard-, abgekürzt AES,-Kryptoalgorithmus und Angaben zum betreffenden Händler verarbeitet wird. Zusätzlich werden die oben genannten Angaben und Daten hinsichtlich von Einschränkungen mit verarbeitet. Zum Schluss wird der Token 14 mit einem Schlüssel der Karte 16 signiert.

Für das Einlösen des Tokens 14 ändert sich nur die Verifikation des Tokens 14. Statt mit Hilfe einer Datenbank des Token Service Providers 2 zu prüfen, ob der Token 14 ausgegeben wurde, muss nun mit Hilfe der Signatur die Gültigkeit des Tokens 14 geprüft werden. Auch eine Sperrlistenprüfung ist hiermit möglich.

Vorteilhaft am neuen Verfahren ist, dass die PAN nicht mehr übertragen wird, sondern nur eine abgeleitete Größe. Die unsichere Verbindung zwischen dem Kartenleser 5 und dem Merchant 6 stellt deshalb keine Gefährung für die Datensicherheit des Tokens 14 mehr dar. Der Händler, sprich hier Merchant 6, muss sich nicht mehr um eine technische oder geschäftsmäßige Verbindung mit dem Token Service Provider 2 kümmern. Der Issuer 12 kann selber den Token 14 entschlüsseln und verifizieren. Auch hier ist kein zusätzlicher Token Service Provider 2 mehr notwendig.

Ferner kann das oben beschriebene, erfindungsgemäße Verfahren zur Sicherung eines kontaktlosen Bezahlvorganges, z.B. an einem kontaktlosen Kartenleser, z.B. einem NFC-Leser, verwendet werden.

### Bezugszeichenliste

- 2: Token Service Provider
- 4: Smart Phone
- 5: Kartenleser
- 6: Merchant
- 8: Acquirer
- 10: Payment Network
- 12: Issuer
- 14: Token
- 16: Karte

## Patentansprüche

1. Verfahren zur Durchführung einer Zahlungstransaktion mittels eines Tokens (14),
wobei der Token (149 von einer Prüfungsstelle (2) auf seine Echtheit geprüft wird und nach erfolgreicher Prüfung auf Echtheit
eine Authentisierungsstelle (12) nach erfolgreicher Prüfung des Tokens (14) auf Authentizität die Durchführung der Zahlungstransaktion freigibt,
**dadurch gekennzeichnet, dass** der Token (14) von einem Datenträger (16) eines Käufers erzeugt wird.

2. Verfahren nach Anspruch 1, **dadurch gekennzeichnet, dass** der Datenträger (16) zur Erzeugung des Tokens (14) folgende Daten verwendet:
- eine Zufallszahl, welche vom Datenträger (16) erzeugt wird, und
- mindestens eine Vorgabe zur Verwendung des Tokens (14), und
- eine Identifikationsnummer des Datenträgers (16) und/oder
- Kontodaten des Käufers.

3. Verfahren nach Anspruch 2, **dadurch gekennzeichnet, dass** der Käufer oder der Datenträger (16) eine Verwendung des Tokens (14) hinsichtlich eines Zahlungsempfängers und/oder eines Zahlungsbetrags und/oder einer Gültigkeitsdauer des Tokens (14) und/oder einer zulässigen Anzahl von Verwendungen des Tokens (14) vorgeben.

4. Verfahren nach Anspruch 2 oder 3, **dadurch gekennzeichnet, dass** die Daten des Tokens (14) verschlüsselt werden.

5. Verfahren nach Anspruch 4, **dadurch gekennzeichnet, dass** die Daten des Tokens (14) symmetrisch oder asymmetrisch verschlüsselt werden

6. Verfahren nach einem der vorhergehenden Ansprüche, **dadurch gekennzeichnet, dass** für den Token (14) eine Signatur durch den Datenträger (16) berechnet wird, um eine Veränderung des Tokens (14) feststellen zu können.

7. Verfahren nach Anspruch 6, **dadurch gekennzeichnet, dass** für die Signatur ein Schlüssel des Datenträgers (16) verwendet wird.

8. Verfahren nach einem der vorhergehenden Ansprüche, **dadurch gekennzeichnet, dass** sich der Käufer zur Erzeugung des Tokens (14) gegenüber dem Datenträger (16) authentisiert.

9. Verfahren nach Anspruch 8, **dadurch gekennzeichnet, dass** sich der Käufer mittels einer persönlichen Identifikationsnummer oder eines biometrischen Merkmals authentisiert.

10. Verfahren nach einem der vorhergehenden Ansprüche, **dadurch gekennzeichnet, dass** der Datenträger (16) in Hardware oder in Software realisiert ist.

11. Verfahren nach Anspruch 10, **dadurch gekennzeichnet, dass** als Datenträger (16) eine SIM-Karte oder eine Bankkarte oder eine Kreditkarte oder ein Sicherheitsmodul verwendet wird.

12. Verfahren nach Anspruch 11, **dadurch gekennzeichnet, dass** als Sicherheitsmodul ein elektronisches Sicherheitselement oder eine Universal Integrated Chip Card oder eine Trusted Execution Environment verwendet wird.

13. Verfahren nach einem der vorhergehenden Ansprüche, **dadurch gekennzeichnet, dass** der Datenträger (16) mit einem Kommunikationsgerät (4, 5) kommuniziert.

14. Verfahren nach Anspruch 13, **dadurch gekennzeichnet, dass** das Kommunikationsgerät (4, 5) ein Notebook, ein Tabletcomputer, ein Laptop, ein Smartphone, eine Smartwatch oder ein Kartenterminal eines Händlers oder einer Bank ist.

15. Verfahren nach Anspruch 14, **dadurch gekennzeichnet, dass** im Kommunikationsgerät (4, 5) zur Berechnung des Tokens (14) ein Sicherheitsmodul verwendet wird.
